(19) Europäisches Patentamt
European Patent Office
Office européen des brevets

(11) Veröffentlichungsnummer : **0 136 626**
**B1**

(12) **EUROPÄISCHE PATENTSCHRIFT**

(45) Veröffentlichungstag der Patentschrift : **21.10.87**

(21) Anmeldenummer : **84111213.9**

(22) Anmeldetag : **20.09.84**

(51) Int. Cl.⁴ : **C 08 K 5/00**, C 08 K 13/02, H 01 B 1/12 // (C08K5/00, 5:16, 5:09),(C08K13/02, 5:16, 3:24)

# (54) Gegen HCN-Abspaltung stabilisierte, TCNQ-Komplexe enthaltende organische Polymere.

(30) Priorität : **30.09.83 DE 3335513**

(43) Veröffentlichungstag der Anmeldung : **10.04.85 Patentblatt 85/15**

(45) Bekanntmachung des Hinweises auf die Patenterteilung : **21.10.87 Patentblatt 87/43**

(84) Benannte Vertragsstaaten : **AT CH DE FR GB IT LI NL**

(56) Entgegenhaltungen :
**EP-A- 0 071 862**
**GB-A- 1 067 260**

(73) Patentinhaber : **BAYER AG**
**Konzernverwaltung RP Patentabteilung**
**D-5090 Leverkusen 1 Bayerwerk (DE)**

(72) Erfinder : **Jonas, Friedrich, Dr,**
**Krugenofen 15**
**D-5100 Aachen (DE)**
Erfinder : **Hocker, Jürgen, Dr.**
**Eichenweg 6**
**D-5060 Bergisch-Gladbach 2 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 136 626 B1

**Beschreibung**

Gegenstand der Erfindung sind gegen HCN-Abspaltung stabilisierte, TCNQ-Komplexe enthaltende Kunststoffe mit hoher elektrischer Leitfähigkeit und Formteile, Folien und Überzüge aus diesem Material. TCNQ-Komplexe sind Komplex-Salze auf Basis des 7,7,8,8-Tetracyanochinodimethan.

Kunststoffe — meist synthetische thermoplastische Polymere — sind im allgemeinen gute elektrische Isolatoren mit spezifischen elektrischen Leitfähigkeiten kleiner als $10^{-14}$ (Ohm × cm)$^{-1}$. Kunststoffe können sich daher stark elektrostatisch aufladen, was für viele Anwendungsbereiche unbedingt vermieden werden muß. Dies trifft insbesondere dort zu, wo explosive Gas- oder Staub-Gas-Gemische durch Funkenentladung gezündet werden können.

Um Kunststoffe antistatisch auszurüsten, ist eine große Zahl von Antistatikzusätzen entwickelt worden. Diese Stoffe werden beispielsweise auf die Oberfläche von Kunststoffteilen aufgebracht. In der Regel verlieren sie aber nach kurzer Zeit ihre Wirksamkeit. Man hat auch Antistatikzusätze in die Kunststoffe eingearbeitet. Häufig verschlechtern sich dann die Eigenschaften des Kunststoffes oder die Zusätze diffundieren aus. Die Antistatikzusätze verleihen der Kunststoffoberfläche eine gewisse Hydrophilie, so daß sich ein von der Luftfeuchte abhängiger Wasserfilm an der Oberfläche bilden kann, der die Aufladung verhindert.

Um Kunststoffe antistatisch zu machen, bedarf es mindestens einer spezifischen Leitfähigkeit von $10^{-11}$ bis $10^{-10}$ (Ohm × cm)$^{-1}$ oder eines Oberflächenwiderstandes von max. $10^{9}$ bis $10^{10}$ Ohm.

Für elektrisch leitfähige Kunststoffe gibt es eine Fülle von Anwendungen im Bereich der Elektrotechnik bzw. Elektronik. So werden z. B. in zunehmenden Maße Chemie-Werkstoffe gebraucht, die elektromagnetische Felder abschirmen können. Daneben finden leitfähige Polymere Anwendung als aktive bzw. passive Systemkomponenten. Natürlich richtet sich hier die Anwendung nach der erzielten Leitfähigkeit. Hierbei kommt es darauf an, das übrige Eigenschaftsbild der Kunststoffe nicht nachteilig zu verändern.

Um Kunststoffe elektrisch leitfähig zu machen, hat man versucht, anorganische, elektrisch leitende Substanzen, z. B. Metalle, Metalloxide, Metallsulfide, Ruß oder Graphit einzuarbeiten. Diese Zusätze sich aber mit den organischen Polymeren sehr schlecht. Um praktisch verwendbare Leitfähigkeiten zu erzielen, muß man so große Mengen zusetzen — meist 10 bis 30 Gew.-%, bezogen auf den Kunststoff — daß die mechanischen Eigenschaften entscheidend verschlechtert werden. Man kann auch Kunststoffe durch Zusatz von Charge-Transfer-Komplexen (CT-Komplexen) elektrisch leitend machen. Kristalline CT-Komplexe gehören mit zu den besten organischen Leitern. Kristalle bestimmter CT-Komplexe besitzen sogar metallische Leitfähigkeit. Organische Komplex-Salze auf Basis des 7,7,8,8-Tetracyanochinodimethan, nachstehend als TCNQ bezeichnet, sind besonders gut leitende CT-Komplexe.

Durch Zusatz von CT-Komplexen zu Kunststoffen läßt sich deren elektrische Leitfähigkeit zum Teil beträchtlich erhöhen. Hierbei ist die erzielte Leitfähigkeit abhängig von der Konzentration und Kristallform des im Polymeren eingearbeiteten CT-Komplexes. Zur Erzielung hoher Leitfähigkeiten bis in den halbleitenden Bereich ($10^{-6}$ bis $10^{-3}$ (Ohm × cm)$^{-1}$) sind zum Teil erhebliche Mengen an CT-Komplexen erforderlich, die zwischen 8 und 20 Gew.-%, bezogen auf den Kunststoff, liegen können.

Man kann auch Kunststoffe durch Zusatz von Lösungen von TCNQ-Komplexen in geeigneten Lösungsmitteln antistatisch ausrüsten (z. B. EP-A-71 862). Dabei kommt man mit wesentlich geringeren Mengen, z. B. 1-2 % aus.

Für die antistatische Ausrüstung von Kunststoffen geeignete TCNQ-Komplexe sind an sich bekannt. Ihre Zusammensetzung kann durch die Formel (I)

$$D \cdot (TCNQ)_n$$

beschrieben werden, in der

D für einen Elektronendonator und

n für eine Zahl von 1 bis 5, vorzugsweise für 2,

steht.

Ein Überblick findet sich in J. Am. Chem. Soc. 84, 3374-3387 (1962).

Bevorzugt werden in Rahmen der Erfindung solche CT-Komplexe, deren Donatorteil sich von einer organischen, Stickstoff und/oder Sauerstoff und/oder Schwefel enthaltenden Verbindung ableitet und als Kation vorliegt. Beispiele hierfür sind die Kationen der folgenden Verbindungen bzw. die durch Alkylierung hergestellten entsprechenden quarternären Ammoniumionen :

Triethylamin, Diethylcyclohexylamin, Chinolin, Benzo-2,3-chinolin, o-Phenanthrolin, Benzthiazol, N-Methylbenzimidazol, Pyridin, 2,2'-Dipyridin, 4,4'-Dipyridin, 4,5-Dimethylthiazolin, 1-Phenylimidazolidin, Bis-[1,3-diphenylimidazolidinyliden-(2)], Bis-[3-methyl-benz-thiazolinyliden(2)], Isochinolin.

Prinzipiell können alle Kunststoffe mit TCNQ-Komplexen antistatisch ausgerüstet werden. Beispielsweise seien genannt : Polyolefine wie Polyethylen, Polystyrol, Polyisopren, Polyvinylchlorid, Polyamide, wie Polyamid-6,6, Polyester wie Polyethylenterephthalat, Polycarbonate, Polyacrylnitril, Acrylnitril-Butadien-Styrol-Copolymerisate (ABS), Polyvinylacetat, Celluloseester wie Celluloseacetat, Polyurethane.

Ein Nachteil, der allen TCNQ-Komplexe enthaltenden Polymeren anhaftet, ist eine im Laufe der Zeit merkliche HCN-Abspaltung, die in Extremfällen durch den Geruch nach Blausäure festgestellt werden

kann.

Wegen der Giftigkeit der Blausäure waren mit TCNQ-Komplexen ausgerüstete Kunststoffe bisher für viele praktische Anwendungen nicht geeignet.

Gegenstand der Erfindung sind gegen HCN-Abspaltung stabilisierte, mit TCNQ-Komplexen ausgerüstete Kunststoffe durch Zusatz von 0,005-5 Mol pro Mol TNCQ-Komplex eines Salzes oder Komplexsalzes von Ni(II), Cu(II), Cu(I), Zn(II), Pd(II), Ag(I), Cd(II), Pt(II), Au(III), Hg(II) mit organischen Carbonsäuren wie Essigsäure, 2-Ethylhexansäure, Stearinsäure, Benzoesäure, organischen Sulfonsäuren oder anorganischen Säuren wie Fluorwasserstoff, Salzsäure, Bromwasserstoff, Iodwasserstoff, Perchlorsäure, Salpetersäure, Schwefelsäure, Phosphorsäure sowie entsprechende Komplexsalze mit anorganischen oder/und organischen Liganden.

Besonders bevorzugt sind Kupfer(II)- und Nickelsalze bzw. -komplexsalze

z. B. Nickelsalze organischer Carbonsäuren wie :
Nickelacetat, Nickel-2-ethylhexanoat, Nickelstearat, Nickelbenzoat
Nickelkomplexe organischer 1,3-Dicarbonylverbindungen wie Nickelacetylacetonat .
Nickelsalze anorganischer Säuren, wie Nickelbromid, Nickelperchlorat, Nickelfluorid

Kupfersalze organischer Carbonsäuren wie :
Kupferacetat, Kupfer-2-ethylhexanoat, Kupferstearat, Kupferbenzoat
Kupferkomplexe organischer 1,2-Dicarbonylverbindungen wie Kupferacetylacetonat, Kupferacetoacetat
Kupfersalze anorganischer Säuren wie Kupferbromid, Kupferchlorid, Kupferperchlorat
Kupferkomplexe von Aminocarbonsäuren wie Kupfersalicylat, Di-Natrium-Kupferethylendiamintetraacetat.

Die Salze bzw. Metallkomplexsalze können den Kunststoffen in einer Menge von 0,005 bis 5 Mol, bevorzugt 0,05 bis 1 Mol, besonders bevorzugt 0,1 Mol bis 0,5 Mol, bezogen auf 1 Mol des zugesetzten TCNQ-Komplexes, zugesetzt werden.

Die Salze bzw. Metallkomplexsalze können in festem Zustand oder aus Lösung in die Polymeren eingearbeitet werden.

Werden die Kunststoffe aus Lösung verarbeitet, dann kann man eine Lösung eines TCNQ-Komplexes bzw. einen fein dispersen TCNQ-Komplex und eine Lösung des stabilisierenden Salzes oder das Salz in fester Form mit einer Lösung des Kunststoffs vermischen und die Mischung weiterverarbeiten. Zum Beispiel können aus solchen Mischungen durch Gießen antistatisch ausgerüstete Folien hergestellt werden.

Bei der Verarbeitung der Kunststoffe aus der Schmelze, z. B. durch Extrudieren, werden die TCNQ-Komplexe und die stabilisierenden Salze wie übliche Zusätze bei der Verarbeitung von Thermoplasten eingearbeitet.

Die erfindungsgemäßen Mischungen sind ebenfalls zur Herstellung von antistatischen Überzügen auf nichtleitenden Substraten, z. B. Glas, organischen Polymeren wie Polyvinylchlorid sehr gut geeignet.

## Beispiele

### HCN-Bestimmung

Je 20 g Folie nach Beispiel 1 bis 9 wurden 7 Tage in 4-ltr.-Glasgefäßen luftdicht verschlossen. Anschließend wurde die gebildete HCN-Menge in ppm bestimmt. (Nachweisgrenze 1 ppm).

### Beispiel 1

Zu 200 g einer 10 %igen Lösung eines handelsüblichen Polycarbonats (z. B. Makrolon (R) 5900 der Firma Bayer AG, Leverkusen) in Methylenchlorid wird unter Rühren eine Lösung von 0,2 g N-Methylchinolinium$^{\oplus}$ $(TCNQ)_2^{\ominus}$ in 2 ml DMF und 8 ml Acetonitril gegeben. Die Lösung wird zu einem Film gegossen (Dicke der Folie nach dem Trocknen 100 µm) und die nach 7 Tagen abgegebene HCN-Menge, wie oben beschrieben, bestimmt.

Bei den Beispielen 2 bis 9 wurde wie in Beispiel 1 vorgegangen, mit dem Unterschied, daß vor dem Gießen der Folie eine Lösung des jeweiligen Stabilisators im angegebenen Lösungsmittel in die Gießlösung eingerührt wurde.

Die verwendeten Stabilisatoren und die damit erzielten HCN-Werte sind in Tabelle 1 zusammengefaßt.

(Siehe Tabelle 1 Seite 4 f.)

Tabelle 1

| Beispiel Nr. | Stabilisator (g) | ml | Lösungsmittel | HCN (ppm) | R |
|---|---|---|---|---|---|
| 1 | - | - | - | 30 | $2 \cdot 10^7$ |
| 2 | 0,2 Cu $(acac)_2$ | 10 | Dichlormethan | 0 | $3 \cdot 10^8$ |
| 3 | 0,2 Cu $(acetoacetat)_2$ | 10 | Dichlormethan | 0 | $2 \cdot 10^{10}$ |
| 4 | 0,2 Cu $(CH_3COO)_2$ | 10 | Acetonitril | 0 | $1 \cdot 10^7$ |
| 5 | 0,2 Zn $(acac)_2$ | 10 | Dichlormethan | 2 | $6 \cdot 10^7$ |
| 6 | 0,2 Ni $(acac)_2$ | 10 | Dichlormethan | 0 | $9 \cdot 10^7$ |
| 7 | 0,1 Cu $(acac)_2$ | 10 | Dichlormethan | 0 | $7 \cdot 10^7$ |
| 8 | 0,1 Ni $(acac)_2$ | 10 | Dichlormethan | 0 | $6 \cdot 10^7$ |
| 9 | 0,1 Cu $(C_{17}H_{35}-COO)_2$ | 10 | Chloroform | 0 | $8 \cdot 10^7$ |

acac = Acetylacetonat-Rest
R = Oberflächenwiderstand in Ω · cm nach DIN 53 483

Beispiel 10

16,3 g N-Methylchinoliniumjodid werden in einer Rührapparatur mit Soxhlettaufsatz in 300 ml Methylenchlorid gelöst. In den Soxhlettaufsatz werden 16,3 g TCNQ gegeben, das bei Rückfluß kontinuierlich extrahiert wird. Die Reaktion ist beendet, wenn alles TCNQ herausgelöst ist. Der ausgefallene Komplex wird abgesaugt, mit Methylenchlorid gewaschen und getrocknet.

Beispiel 11

0,2 g des TCNQ-Komplexes nach Beispiel 10 werden mit 200 g einer 10 %igen Polycarbonatlösung in Methylenchlorid versetzt und bis zur homogenen Mischung gerührt. Die Lösung wird zu einem Film (Dicke der Folie nach dem Trocknen ~ 100 µm) gegossen und die nach 7 Tagen abgegebene HCN-Menge bestimmt.

Bei den Beispielen 12-16 (Tabelle 2) wurde wie in Beispiel 11 vorgegangen, mit dem Unterschied, daß vor dem Gießen der Folie eine Lösung des jeweiligen Stabilisators im angegebenen Lösungsmittel in die Gießlösung eingerührt wurde.

Tabelle 2

| Beispiel Nr. | Stabilisator (g) | ml | Lösungsmittel | HCN (ppm) | R |
|---|---|---|---|---|---|
| 11 | - | - | - | 10 | $10^7$ |
| 12 | 0,05 Cu $(acac)_2$ | 10 | Dichlormethan | 0 | $2 \cdot 10^7$ |
| 13 | 0,2 Cu $(acetoacetat)_2$ | 10 | Dichlormethan | 0 | $5 \cdot 10^9$ |
| 14 | 0,2 Cu $(CH_3COO)_2$ | 10 | Acetonitril | 0 | $2 \cdot 10^7$ |
| 15 | 0,1 Ni $(acac)_2$ | 10 | Dichlormethan | 0 | $6 \cdot 10^7$ |
| 16 | 0,2 Cu $(C_{17}H_{35}COO)_2$ | 10 | Chloroform | 0 | $3 \cdot 10^8$ |

acac = Acetylacetonat-Rest
R = Oberflächenwiderstand in Ω · cm nach DIN 53 483

Tabelle 3 zeigt die Verwendung anderer TCNQ-Komplexe.
Analog Beispiel 2 wurden je 0,2 g TCNQ-Komplexe der Formel I-IV eingesetzt.

Tabelle 3

| Beispiel | TCNQ-Komplex | Stabilisator (g) | ml | Lösungsmittel | HCl ppm |
|---|---|---|---|---|---|
| 17 | I | 0,2 Cu $(acac)_2$ | 10 | Dichlormethan | 0 |
| 18 | I | 0,1 Ni $(acac)_2$ | 10 | Dichlormethan | 0 |
| 19 | II | 0,2 Cu $(acac)_2$ | 10 | Dichlormethan | 0 |
| 20 | II | 0,1 Ni $(acac)_2$ | 10 | Dichlormethan | 0 |
| 21 | III | 0,2 Cu $(acac)_2$ | 10 | Dichlormethan | 0 |
| 22 | III | 0,2 Ni $(acac)_2$ | 10 | Dichlormethan | 0 |
| 23 | IV | 0,2 Cu $(acac)_2$ | 10 | Dichlormethan | 0 |
| 24 | IV | 0,2 Ni $(acac)_2$ | 10 | Dichlormethan | 0 |

(I) ≙ 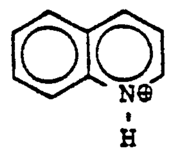 $(TCNQ)_2^{\ominus}$

(II) ≙ 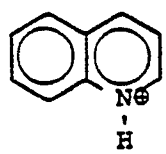 $(TCNQ)^{\ominus}$

(III) ≙ 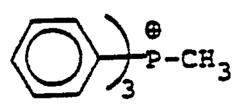 $(TCNQ)_2^{\ominus}$

(IV) ≙ 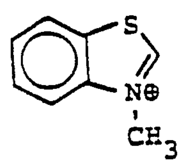 $(TCNQ)_2^{\ominus}$

Beispiel 25

Zu einer Lösung aus 30 g Polyvinylacetat und 2 g Nickelethylhexanoat in 450 g Methylenchlorid und 450 g 1,2-Dichlorethan wird eine Suspension aus 4 g CT-Komplex nach Beispiel 10 in 70 g Methylenchlorid gegeben. Die Mischung wird bis zur homogenen Verteilung des Komplexes gerührt.

In die so erhaltene Mischung wird eine Glasplatte eingetaucht. Nach dem Verdunsten des Lösungsmittels erhält man eine haftfeste Beschichtung mit einem Oberflächenwiderstand von $10^5$ Ω/cm.

Beispiel 26

In die CT-komplexhaltige Lösung nach Beispiel 25 wird eine handelsübliche PVC-Verpackungsschiene für Elektronik-Bausteine eingetaucht. Nach dem Verdunsten des Lösungsmittels erhält man eine haftfeste Beschichtung mit einem Oberflächenwiderstand von 7 · $10^6$ Ω/cm.

## Patentansprüche

1. Gegen HCN-Abspaltung stabilisierte, mit TCNQ-Komplexen (Komplex-Salze auf Basis des 7,7,8,8-Tetracyanochinodimethan) ausgerüstete Kunststoffe, gekennzeichnet durch einen Gehalt von 0.005-5 mol pro Mol TCNQ-Komplex eines Salzes oder Komplexsalzes von Ni(II), Cu(II), Cu(I), Zn(II), Pd(II), Ag(I), Cd(II), Pt(II), Au(III), Hg(II), mit einer organischen Carbonsäure oder einer anorganischen Säure.
2. Formkörper aus den Kunststoffen gemäß Anspruch 1.
3. Verwendung der Kunststoffe nach Anspruch 1 zur Herstellung von antistatischen Folien und Überzügen auf Substraten.

## Claims

1. Plastics which are stabilised against the emission of HCN and contain TCNQ complexes (complex salts based on 7,7,8,8-tetracyanoquinodimethane), characterised in that they contain 0.005-5 moles, per mole of TCNQ complex, of a salt or complex salt of Ni(II), Cu(II), Cu(I), Zn(II), Pd(II), Ag(I), Cd(II), Pt(II), Au(III) or Hg(II) with an organic carboxylic acid or an inorganic acid.
2. Mouldings produced from the plastics according to Claim 1.
3. Use of the plastics according to Claim 1 for the production of antistatic foils and coatings on substrates.

## Revendications

1. Matières plastiques contenant des complexes de TCNQ (sels complexes à base de 7,7,8,8-tétracyanoquinodiméthane) stabilisées contre le dégagement de HCN, caractérisées en ce qu'elles contiennent 0,005-5 moles par mol de complexe de TCNQ d'un sel ou sel complexe de Ni(II), Cu(II), Cu(I), Zn(II), Pd(II), Ag(I), Cd(II), Pt(II), Au(III), Hg(II), avec un acide carboxylique organique ou un acide inorganique.
2. Pièces moulées en matières plastiques selon la revendication 1.
3. Utilisation des matières plastiques selon la revendication 1 pour la fabrication de feuilles antistatiques et de revêtements antistatiques sur des substrats.